# EUROPÄISCHE PATENTANMELDUNG

(11) **EP 1 221 597 A1**
(43) Veröffentlichungstag der Anmeldung: **10.07.2002**
(21) Anmeldenummer: 01810011.5
(22) Anmeldetag: 05.01.2001
(51) Int. Cl.: G01J 3/08

(54) **Spektrometer mit automatischer Referenzierung**

(71) Anmelder: Büchi Laboratoriums-Technik AG, CH-9230 Flawil (CH)
(72) Erfinder: Kellerhans, Hanspeter, 8610 Uster (CH)
(74) Vertreter: Müller, Christoph Emanuel

(57) **Zusammenfassung**

Ein Spektrometer (1) zur Reflexionsmessung enthält eine drehbare Spiegelanordnung (5), welche um eine optische Achse (21) zwischen wenigstens einer Messstellung (12) und einer Referenzstellung (10) bewegbar ist, so dass Mess- und Referenzbedingungen weitgehend identisch sind. Die drehbare Spiegelanordnung (5) und die Referenzprobe(n) sind in einem geschlossenen Gehäuse (13) angeordnet. Messproben (11) werden auf einer Aufnahmestelle (15) an der Aussenwand (14) des Gehäuses (13) aufgesetzt. Das Spektrometer (1) mit drehbarer Spiegelanordnung (5) kann zur Mehrfach-Referenzierung eingesetzt werden.

## Beschreibung

Die Erfindung betrifft ein Spektrometer zur Reflexionsmessung und ein Verfahren zur Referenzierung eines Spektrometers zur Reflexionsmessung mit den Merkmalen des Oberbegriffs der unabhängigen Patentansprüche.

Die Referenzierung ist ein wichtiger Schritt um die Reproduzierbarkeit von Messresultaten zu gewährleisten. Dabei wird eine Referenzprobe, ein sogenannter Standardreflektor, in den Lichtstrahl eingeführt und unter möglichst identischen Bedingungen wie bei der eigentlichen Probenmessung ein entsprechender Referenzwert, eine Referenzkurve oder ein Referenzspektrum ermittelt. Damit lassen sich Änderungen von Gerätekonstanten, welche sich z.B. mit fortschreitender Betriebszeit oder in Abhängigkeit der Betriebstemperatur ergeben können, bestimmen und die nachfolgenden Messungen können durch entsprechende aus der Referenzmessung ermittelte Koeffizienten korrigiert werden.

Spektrometer zur Reflexionsmessung und Verfahren zur Referenzierung sind bereits bekannt. Das Einfügen der Referenzprobe in den Lichtstrahl kann dabei manuell durch den Operator geschehen. Aus dem Stand der Technik sind aber auch Spektrometer und Verfahren zur automatischen Referenzierung bekannt.

So zeigt EP 502 495 ein Spektrometer mit dem vor jeder Messung einer unbekannten Probe automatisch eine Referenzmessung durchgeführt werden kann. Zur Referenzierung enthält das Breitband-Spektrometer (400 nm bis 2500 nm) eine spatenförmige Platte auf der sich ein Standardreflektor für den NIR-Bereich und ein Standardreflektor für den sichtbaren Bereich befinden. Die Platte ist im Gehäuse an der Antriebswelle eines Schrittmotors befestigt. Der Schritt-Motor befindet sich auf dem Gehäuse nahe der Austrittsöffnung des Lichtes, wobei seine Antriebswelle sich ins Gehäuse erstreckt. Die Platte mit den Standardreflektoren wird durch den Schrittmotor in den Lichtstrahl eingeschwenkt. Anschliessend kann ein Referenzspektrum über die ganze Bandbreite gescannt werden, wobei die Platte so positioniert werden kann, dass entweder nur einer oder aber beide Standardreflektoren im Lichtstrahl sind. Für die Probenmessung kann die Platte wieder aus dem Lichtstrahl geschwenkt werden, so dass der Strahl durch die Austrittsöffnung im Gehäuse auf eine unbekannte Probe geleitet werden kann.

US 5,040,889 zeigt ein Spektrometer mit kombinierten NIR- und UV/VIS-Lichtquellen. Mit den unterschiedlichen Lichtquellen werden fluoreszierende Weissmacher getestet. Als Standardreflektor wird ein Weissmacher eingesetzt, der auf einer Platte aufgetragen ist. Zur Durchführung von Referenzmessungen wird die Platte in den Lichtstrahl eingeschwenkt. Bewegt wird die Platte ebenfalls mit Hilfe eines Schritt-Motors, der im Gehäuse untergebracht ist. Die Referenzmessungen können vor jeder Messung einer unbekannten Probe, in bestimmten Zeitintervallen, in Abhängigkeit der Temperatur oder sporadisch durchgeführt werden.

Ein Nachteil der aus dem Stand der Technik bekannten Spektrometer mit automatischer Referenzierung besteht darin, dass die unbekannte Messprobe und die Referenzprobe an unterschiedlichen Stellen in den Lichtstrahl eingeführt werden, was zu unterschiedlichen Anordnungen bezüglich der statisch gehaltenen Spiegelanordnung führt. Es resultieren unterschiedliche Bedingungen für die Ermittlung von Referenz- und Messspektren.

Aufgabe der Erfindung ist es, die Nachteile des Bekannten zu vermeiden, insbesondere also ein Spektrometer zur Reflexionsmessung mit automatischer Referenzierung und ein Verfahren zur automatischen Referenzierung zu schaffen, bei dem Mess- und Referenzbedingungen weitgehend identisch sind. Im weiteren soll die Kalibrierung im Hintergrund ablaufen und damit den Benutzer möglichst vollständig entlasten und Verunreinigungen, insbesondere der Referenzproben, sollen möglichst minimiert werden.

Erfindungsgemäss wird diese Aufgabe mit einem Spektrometer zur Reflexionsmessung und einem Verfahren zur Referenzierung eines Spektrometers zur Reflexionsmessung mit den Merkmalen des Oberbegriffs der unabhängigen Patentansprüche gelöst.

Ein erfindungsgemässes Spektrometer zur Reflektionsmessung mit einer Spiegelanordnung zum Umlenken eines Lichtstrahls und wenigstens einer Referenzprobe ist dadurch gekennzeichnet, dass die Spiegelanordnung zwischen wenigstens einer Messstellung und wenigstens einer Referenzstellung bewegbar ist, wobei der Lichtstrahl in der Messstellung auf eine Messprobe umgelenkt werden kann und wobei der Lichtstrahl in der Referenzstellung auf eine Referenzprobe umgelenkt wird. Durch eine bewegbare Spiegelanordnung kann erreicht werden, dass die Referenzprobe(n) nicht mehr in den Lichtstrahl eingesetzt oder eingeschwenkt werden muss und damit stationär gehalten werden kann. Entsprechend kann das Referenzmaterial vor äusseren Einflüssen wie Kratzer, Staub oder anderen Verunreinigungen geschützt werden. Ausserdem kann die Kalibrierung mit entsprechenden Hilfsmitteln besonders gut automatisiert werden.

Besonders vorteilhaft ist es, wenn die Spiegelanordnung zwischen wenigstens einer Messstellung und wenigstens einer Referenzstellung um eine optische Achse drehbar ist, welche durch die Richtung des einfallenden Lichtstrahls definiert wird.

Durch die Rotation der Spiegelanordnung zwischen einer Messstellung und einer Referenzstellung wird erreicht, dass die Messund Kalibrierbedingungen weitgehend identisch sind. Mit Vorteil weist die Spiegelanordnung dabei in bekannter Weise einen Sockel sowie wenigstens einen ersten Spiegel zum Umlenken des von einer Lichtquelle einfallenden Lichtstrahls auf eine Messprobe in Messstellung resp. auf eine Referenzprobe in Referenzstellung auf, sowie wenigstens einen zweiten Spiegel zum Umlenken des von einer Messprobe in Messstellung resp. einer Referenzprobe in Referenzstellung einfallenden Lichtstrahls auf einen Detektor auf. Erfindungsgemäss ist damit der Weg des Lichtstrahls in Mess- und Referenzstellung identisch.

Als Spiegel im Sinne der Erfindung sind insbesondere Planspiegel oder fokussierende Spiegel besonders gut geeignet.

In einem besonders bevorzugten Ausführungsbeispiel ist die Spiegelanordnung in der Messstellung gegenüber der Referenzstellung um 90° verdreht.

Mit Vorteil sind wenigstens die Spiegelanordnung und die Referenzprobe(n) in einem verschlossenen Gehäuse angeordnet. Damit wird ein Innenraum geschaffen, welcher die gegenüber äusseren Einflüssen wie Staub, Partikel, Verunreinigungen äusserst sensiblen Bestandteile des Spektrometers wie Optik und Referenzprobe effektiv schützt. Ein verschlossenes Gehäuse zum Schutz der sensiblen Geräteteile ist besonders gut dann realisierbar, wenn das Gehäuse in seiner Aussenwand wenigstens eine Aufnahmestelle zur Aufnahme einer Messprobe enthält. Damit ist während des Normalbetriebes des Spektrometers kein Eingriff in das Gehäuse notwendig. Spiegelanordnung und Referenzprobe(n) bleiben geschützt. Die Aufnahmestelle zur Aufnahme einer Messprobe an der Aussenwand des Gehäuses ist dabei mit Vorteil so ausgestaltet, dass in Messstellung der Lichtstrahl von der Spiegelanordnung auf die Messprobe an der Aussenwand des Gehäuses umgelenkt werden kann.

Wenn der Abstand d1 von der optischen Achse der Spiegelanordnung zur Messprobe und der Abschied d2 von der optischen Achse der Spiegelanordnung zur Referenzprobe identisch sind, ist auch der Lichtweg in Messstellung und Referenzstellung identisch. Damit werden optimal vergleichbare Bedingungen zwischen Probemessung und Kalibrierung erreicht, was insgesamt die Qualität und Reproduzierbarkeit von Messresultaten verbessert.

Das erfindungsgemässe Spektrometer kann je nach Anwendungsgebiet eine NIR-Lichtquelle für Messungen im Nahen Infrarot-Bereich oder eine UV-/VIS-Lichtquelle für Messungen im ultravioletten oder sichtbaren Bereich enthalten.
Im Sinne der Erfindung ist es denkbar sowohl Geräte mit internen und externen Lichtquellen oder mit Lichtquellen am Gehäuse zu verwenden. In einem besonders bevorzugten Ausführungsbeispiel ist die Lichtquelle im Innern des Gehäuses. Damit wird insbesondere erreicht, dass auch die Lichtquelle vor Verunreinigungen oder mechanischen Beanspruchungen optimal geschützt werden kann.

Eine weitere Verbesserung der Qualität und Reproduzierbarkeit der Messresultate wird erreicht, wenn das Spektrometer nebst einer Standardreferenzprobe noch wenigstens eine weitere Referenzprobe zur internen Überprüfung der Standardreferenzprobe aufweist. Als Standardreferenzprobe im Sinne der Erfindung wird dabei diejenige Referenzprobe verstanden, welche bevorzugt zur Ermittlung von Referenzspektren eingesetzt wird.

Bevorzugte Materialien für die Referenzprobe(n), resp. als Standardreflektoren, sind Spektralon und andere Thermoplaste auf Fluorkohlenwasserstoffbasis, KBr-Pulver, TiO₂-Pulver oder Polystyren. Für die Überprüfung der Wellenlängengenauigkeit eignen sich u. a. Plexiglas und die Salze seltener Erden.

Selbstverständlich können auch andere Referenzmaterialien verwendet werden, welche über ausreichende Reflektivität beziehungsweise über charakteristische, scharfe NIR-Absorptionsbanden verfügen.

Ein weiterer Gegenstand der Erfindung ist ein Verfahren zur Referenzierung eines Spektrometers in Reflektionsmessung mit einer Spiegelanordnung zum Umlenken eines Lichtstrahls und wenigstens einer Referenzprobe, wobei die Spiegelanordnung zur Referenzierung in eine Referenzstellung bewegt wird, insbesondere um die durch den einfallenden Lichtstrahl definierte optische Achse gedreht wird und wobei durch Umlenkung des Lichtstrahls auf eine Referenzprobe ein Referenzspektrum ermittelt wird.

Besonders vorteilhaft ist es, wenn die Kalibrierung automatisch zu einem vorbestimmbaren Zeitpunkt durchgeführt werden kann. Dies kann in bekannter Weise erreicht werden, indem der Drehmechanismus die Spiegelanordnung die Spiegelanordnung über eine Software gesteuert wird, bei welcher der Zeitpunkt für die Referenzmessung entsprechend programmiert werden kann. So ist es denkbar, vor jeder Messung einer Messprobe in Messstellung eine Messung einer Referenzprobe in Referenzstellung durchzuführen. Selbstverständlich sind auch Referenzmessungen aufgrund bestimmter Zeitintervalle oder in Abhängigkeit von anderen Parametern (Temperatur, etc.), welche über eine entsprechende Messanordnung erfasst werden können, denkbar.

In einem besonders bevorzugten Verfahren wird die Spiegelanordnung zwischen einer Messstellung und der Referenzstellung um 90° gedreht. Selbstverständlich sind auch andere Anordnungen der Referenzproben und damit Drehungen um andere Drehwinkel möglich.

Die Erfindung ist im folgenden in Ausführungsbeispielen anhand der Zeichnungen näher erläutert. Es zeigen:
- Figur 1: eine schematische Darstellung eines erfindungsgemässen Spektrometers
- Figur 2a: eine schematische Ansicht einer drehbaren Spiegelanordnung eines erfindungsgemässen Spektrometers in Messstellung
- Figur 2b: eine schematische Ansicht einer drehbaren Spiegelanordnung eines erfindungsgemässen Spektrometers in Referenzstellung
- Figur 3: eine dreidimensionale Darstellung auf ein Gehäuse mit drehbarer Spiegelanordnung eines erfindungsgemässen Spektrometer
- Figur 4: eine Aufsicht auf ein Gehäuse mit drehbarer Spiegelanordnung eines erfindungsgemässen Spektrometers

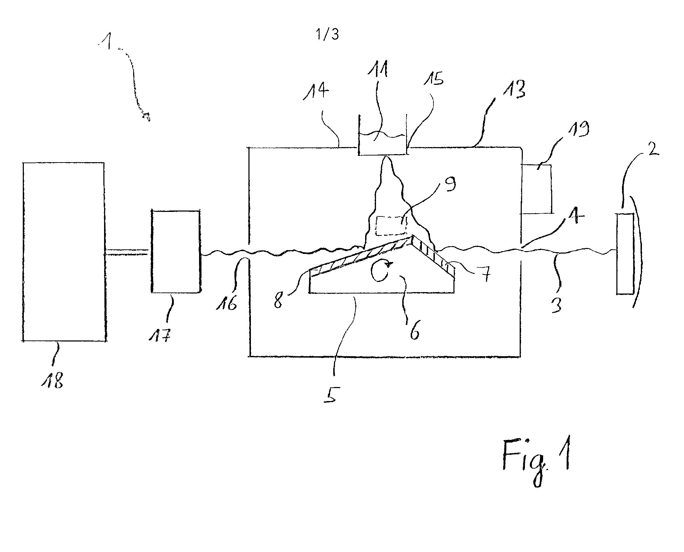

In Figur 1 ist ein erfindungsgemässes Spektrometer 1 mit einer drehbaren Spiegelanordnung 5 gezeigt. Dieses Beispiel soll lediglich eine Ausführungsform eines erfindungsgemässen Spektrometer schematisiert zeigen. Selbstverständlich sind zahlreiche andere Anordnungen denkbar.

Aus einer Lichtquelle 2 wird ein Lichtstrahl 3 in die Eintrittsöffnung 4 eines Gehäuses 13 geleitet. Vor dem Eintritt in das Gehäuse 13 kann der Strahl in bekannter Weise und mit bekannten Hilfsmitteln aufbereitet (parallelisiert, fokusiert, etc.) werden. Als Lichtquelle 2 sind verschiedene Typen von Lampen denkbar. Besonders bevorzugt sind NIR-Lichtquellen und/oder UV/VIS-Lichtquellen. Im Gehäuse 13 befindet sich eine Spiegelanordnung 5 mit einem Sockel 6, einem ersten Spiegel 7 und einem zweiten Spiegel 8. Ebenfalls im Gehäuse 13 befindet sich eine Referenzprobe 9, mit Referenzmaterial 20, welche in Figur 1 nur schematisch hinter der Spiegelanordnung angedeutet ist. An der Aussenwand 14 befindet sich eine Aufnahmestelle 15 für eine Messprobe 11.

In Figur 1 ist die Spiegelanordnung 5 in Messstellung 12 gezeigt. Der Lichtstrahl 3 gelangt durch die Eintrittsöffnung 4 auf den ersten Spiegel 7 und wird dort auf die Messprobe 11 in der Aufnahmestelle 15 der Aussenwand 14 des Gehäuses 13 umgelenkt. Der von der Messprobe 11 reflektierte Lichtstrahl 3 wird dem zweiten Spiegel 8 zugeführt und von dort zu einer Austrittsöffnung 16 auf einen Detektor 17 umgelenkt. Die Spiegelanordnung 5 ist um die optische Achse 21 drehbar, welche durch die Richtung des ein- und ausfallenden Lichtstrahls definiert ist. Die Drehung kann mit Hilfe eines Motors 19, welcher im Beispiel gemäss Figur 1 an der Aussenwand 14 des Gehäuses 13 angebracht ist, geschehen. Durch eine Drehung der Spiegelanordnung 5 um 90° in eine Referenzstellung 10 wird in der in Figur 1 gezeigten Anordnung der Lichtstrahl 3 auf die Referenzprobe 9 mit Referenzmaterial 20 umgelenkt.

Dem Detektor 17 nachgeschaltet kann eine Anordnung zur Datenaufbereitung und Steuerung sein. Dazu können Bestandteile wie Verstärker, A/D-Konverter, Digitalfilter, elektronische Hilfsmittel zur Generierung von Fouriertransformationen und zum Berechnen von Spektogrammen gehören. Diese Hilfsmittel sind bekannt und werden hier nicht näher diskutiert.

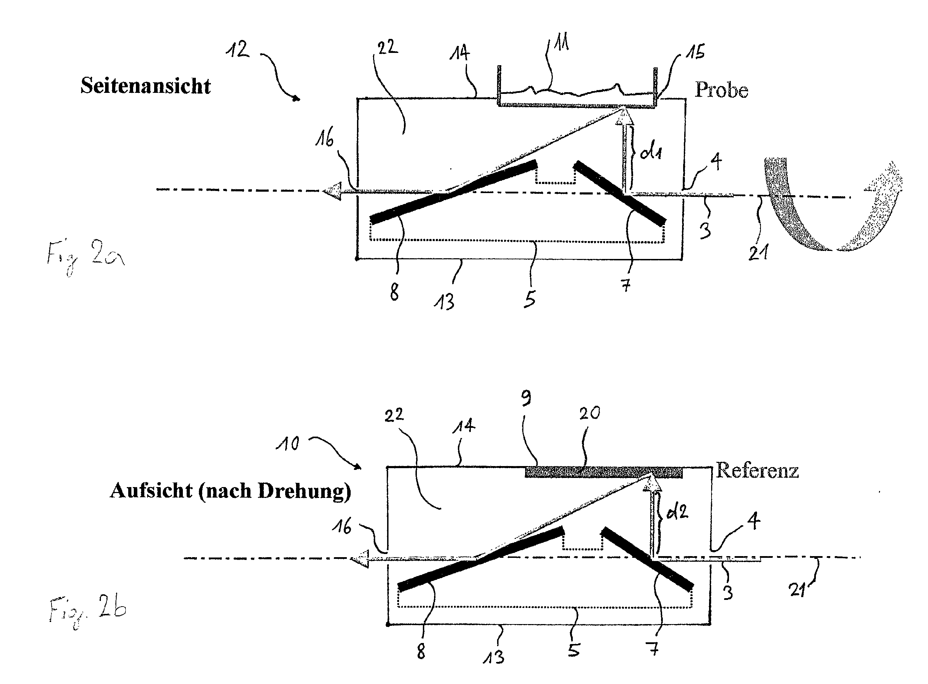

In Figur 2a und 2b ist die schematische Spiegelanordnung in Messstellung 12 (Figur 2a) resp. in Referenzstellung 10 (Figur 2b) gezeigt. In der Messstellung 12 gelangt der Lichtstrahl 3 durch die Eintrittsöffnung 4 des Gehäuses 13 auf den ersten Spiegel 7 der Spiegelanordnung 5, von wo er auf die Messprobe 11, welche in der Aufnahmestelle 15 an der Aussenwand 14 des Gehäuses 13 auf- oder eingesetzt ist, umgelenkt wird. Der von der Messprobe 11 reflektierte Lichtstrahl 3 gelangt auf den zweiten Spiegel 8 der Spiegelanordnung 5 und wird von dort zur Austrittsöffnung 16, wo er den geschlossenen Innenraum 22 des Gehäuses 13 verlässt, umgelenkt.

Durch Drehung der Spiegelanordnung 5 um die optische Achse 21 wird die Spiegelanordnung 5 in die Referenzstellung 10 (Figur 2b) gebracht. Dabei wird der Lichtstrahl 3 vom ersten Spiegel 7 auf eine Referenzprobe 9 mit Referenzmaterial 20 umgelenkt. In Analogie zur Messstellung (Figur 2a) wird der reflektierte Lichtstrahl 3 über den zweiten Spiegel 8 zur Austrittsöffnung 16 umgelenkt.

Aus den Figuren 2a und 2b wird ersichtlich, dass der optische Weg des Lichtstrahls 3 in Messstellung 12 und Referenzstellung 10 identisch ist. Insbesondere der Abstand d1 von der optischen Achse 21 der Spiegelanordnung 5 zur Messprobe 11 sowie der Abstand d2 von der optischen Achse 21 der Spiegelanordnung 5 zur Referenzprobe 9 sind identisch. Damit wird die Vergleichbarkeit von Mess- und Referenzbedingungen optimiert, was zu einer verbesserten Qualität und Reproduzierbarkeit führt. Durch die externe Zuführung der Messprobe 11 an die Aussenwand 14 des Gehäuses 13 einerseits und die Anordnung der Referenzprobe 9 und der Spiegelanordnung 5 im geschlossenen Gehäuse 13 andererseits, wird effektiv verhindert, dass sensible Bestandteile wie Referenzprobe 9 und Spiegelanordnung 5 im Normalbetrieb durch äussere Einflüsse mechanisch (Kratzer) beansprucht und/oder verschmutzt werden.

In den Figuren 2a und 2b ist exemplarisch eine Drehung der Spiegelanordnung 5 um 90° von der Messstellung 12 zur Referenzstellung 10 gezeigt. Selbstverständlich kann die Spiegelanordnung 5 aber um einen beliebigen Winkel um die optische Achse 21 von einer Messstellung 12 zu einer Referenzstellung 10 gedreht werden. Dabei ist es besonders vorteilhaft, wenn die Referenzprobe(n) in einer rotationssymmetrischen Halterung, insbesondere einem Zylinder im Gehäuse 13 angeordnet sind. Dadurch wird erreicht, dass der Abstand d1 resp. d2 nach jeder Drehung der Spiegelanordnung 5 um einen beliebigen Drehwinkel identisch ist.

Selbstverständlich ist es denkbar, die Spiegelanordnung 5 um die optische Achse 21 in mehrere Messstellungen 12 resp. Referenzstellungen 10 zu drehen. Durch eine Anordnung mit mehreren Referenzproben 9 in verschiedenen Referenzstellungen 10 werden unterschiedliche Arten von Kalibrierungen oder eine interne Kalibrierung der verschiedenen Referenzproben 9 gegeneinander möglich. Die Referenzproben 9 können dabei aus gleichen oder unterschiedlichen Referenzmaterialien 20 bestehen. Als Referenzmaterialien 20 können die üblicherweise für entsprechende Lichtquellen verwendeten Standardreflektoren eingesetzt werden.

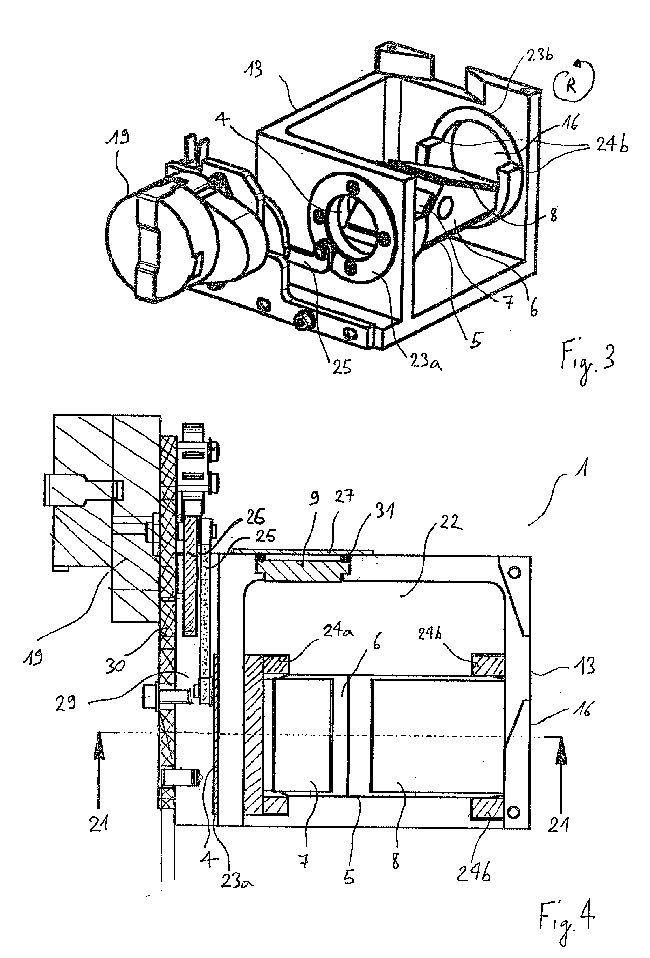

Figur 3 zeigt ein Gehäuse 13 mit einer drehbaren Spiegelanordnung 5 eines erfindungsgemässen Spektrometers 1. Die im Innenraum 22 des Gehäuses 13 angeordnete Spiegelanordnung 5 enthält einen ersten Spiegel 7, einen zweiten Spiegel 8 sowie einen Sokkel 6. Die Spiegelanordnung 5 ist im Bereich der Eintrittsöffnung 4 und im Bereich der Austrittsöffnung 16 drehbar auf je einer Deckelscheibe 23 mit Spiegelaufnahmen 24 gelagert. Der Sockel 6 der Spiegelanordnung 5 ist dabei fest verbunden mit den Spiegelaufnahmen (24), z.B. über Schrauben. An der Aussenseite der Deckelscheibe 23a an der Eintrittsöffnung 4 des Gehäuses 13 greift ein Pleuel 25 an, über den sich die Spiegelanordnung 5 mit Hilfe eines Motors 19 antreiben lässt (Drehsinn in Richtung R).

In Figur 4 ist eine Aufsicht auf ein Gehäuse 13 mit drehbarer Spiegelanordnung 5 eines erfindungsgemässen Spektrometers 1 gezeigt. Dabei ist ein möglicher Antriebsmechanismus im Detail gezeigt. Die Deckelscheibe 23 an der Eintrittsöffnung 4 ist fest, z.B. über eine Schraube, mit einem Pleuel 25 verbunden. Auf den Pleuel wird über eine Pleuelscheibe 26 ein Drehimpuls von einem Motor 19 übertragen. Pleuel 25 und Pleuelscheibe 26 befinden sich in einem Zwischenraum 29. Der Motor 19 ist an einer zusätzlichen Aussenwand 30 befestigt. Durch das vollständige Fernhalten der Antriebsvorrichtung vom Innenraum 22 des Gehäuses 13 werden allfällige Abrieb, Schmieröl oder andere Verschmutzungen von sensiblen Teilen wie Spiegelanordnung 5 und Referenzprobe 9 vollständig ferngehalten. In der in Figur 4 gezeigten Anordnung ist die Referenzprobe 9 über einen Deckel 27, welcher mit O-Ringen 31 abgedichtet ist, von der Aussenseite des Gehäuses 13 zugänglich. Dadurch wird das Ersetzen einer nicht mehr funktionsfähigen Referenzprobe 9 ermöglicht. Im Normalbetrieb bleibt der Deckel 27 jedoch fest verschlossen.

Selbstverständlich sind andere Mechanismen zum Antreiben der drehbaren Spiegelanordnung 5 als die in Figur 4 gezeigte Anordnung denkbar. Im weiteren ist es denkbar, den Drehmechanismus so zu gestalten, dass er über eine Software angesteuert und programmiert werden kann. Damit lässt sich die Referenzmessung automatisieren, und kann im Hintergrund ablaufen, so dass der Benutzer weitgehend entlastet ist.

Selbstverständlich ist es auch denkbar die Spiegelanordnung zwischen Messprobe(n) 10 und Referenzprobe(n) 12 zu verschieben, insbesondere parallel zur optischen Achse der Spiegelanordnung 5.

## Patentansprüche

1. Spektrometer (1) zur Reflexionsmessung mit einer in einem Gehäuse (13) angeordneten Spiegelanordnung (5) zum Umlenken eines Lichtstrahls (3) und wenigstens einer Referenzprobe (9) **dadurch gekennzeichnet, dass** die Spiegelanordnung (5) zwischen wenigstens einer Messstellung (12) und wenigstens einer Referenzstellung (10) bewegbar ist, wobei der Lichtstrahl (3) in der Messstellung (12) auf eine Messprobe (11) umlenkbar ist und wobei der Lichtstrahl (3)in der Referenzstellung (10) auf eine Referenzprobe (9) umlenkbar ist.

2. Spektrometer nach Anspruch 1 **dadurch gekennzeichnet, dass** die Spiegelanordnung (5) zum Bewegen zwischen wenigstens einer Messtellung (12) und wenigstens einer Referenzstellung (10) um die durch den einfallenden Lichtstrahl definierte optische Achse (21) drehbar ist.

3. Spektrometer nach Anspruch 2 **dadurch gekennzeichnet, dass** die Spiegelanordnung (5) in der Messstellung (12) gegenüber der Referenzstellung (10) um 90° verdreht ist.

4. Spektrometer nach einem der Ansprüche 1 bis 3 **dadurch gekennzeichnet, dass** wenigstens die Spiegelanordnung (5) und eine oder mehrere Referenzproben (9) in einem verschlossenen Gehäuse (13) angeordnet sind.

5. Spektrometer nach Anspruch 4 **dadurch gekennzeichnet, dass** das Gehäuse (13) in seiner Aussenwand (14) wenigstens eine Aufnahmestelle (15) zur Aufnahme einer Messprobe (11) enthält.

6. Spektrometer nach einem der Ansprüche 2 bis 5 **dadurch gekennzeichnet, dass** der Abstand d1 von der optischen Achse (21) der Spiegelanordnung (5) zur Messprobe (11) und der Abstand d2 von der optischen Achse (21) der Spiegelanordnung (5) zur Referenzprobe (9) identisch sind.

7. Spektrometer nach einem der Ansprüche 1 bis 6 **dadurch gekennzeichnet, dass** das Spektrometer (1) eine NIR-Lichtquelle (2) enthält.

8. Spektrometer nach einem der Ansprüche 1 bis 6 **dadurch gekennzeichnet, dass** das Spektrometer (1) eine UV/VIS-Lichtquelle (2) enthält.

9. Spektrometer nach einem der Ansprüche 1 bis 8 **dadurch gekennzeichnet, dass** das Spektrometer (1) eine Standardreferenzprobe (9) und wenigstens eine weitere Referenzprobe (9) zur Referenzierung der Standardreferenzprobe (9) aufweist.

10. Spektrometer nach einem der Ansprüche 1 bis 9 **dadurch gekennzeichnet, dass** als Referenzmaterial (20) für die Referenzproben (9) Spektralon, KBr-Pulver, TiO₂-Pulver, Oxyde seltener Erden, Polystyren oder Plexiglas verwendet wird.

11. Verfahren zur Referenzierung eines Spektrometers in Reflexionsmessung mit einer Spiegelanordnung (5) zum Umlenken eines Lichtstrahls (3) und wenigstens eine Referenzprobe (9)
**dadurch gekennzeichnet, dass** die Spiegelanordnung (5) zur Referenzierung in eine Referenzstellung (10) bewegt wird, und dass mit dem auf eine Referenzprobe (9) umgelenkten Lichstrahl (3) ein Referenzspektrum ermittelt wird.

12. Verfahren nach Anspruch 11 **dadurch gekennzeichnet, dass** die Spiegelanordnung (5) zum Bewegen in die Referenzstellung um die durch den einfallenden Lichtstrahl definierte optische Achse gedreht wird.

13. Verfahren nach einem der Ansprüche 11 oder 12 **dadurch gekennzeichnet, dass** die Bewegung, insbesondere die Drehung, der Spiegelanordnung (5) automatisch zu einem vorbestimmbaren Zeitpunkt durchgeführt wird.

14. Verfahren. nach einem der Ansprüche 11 bis 13 **dadurch gekennzeichnet, dass** vor jeder Messung einer Messprobe (11) automatisch eine Referenzmessung durchgeführt wird.

15. Verfahren nach einem der Ansprüche 11 bis 14 **dadurch gekennzeichnet, dass** die Spiegelanordnung (5) zwischen einer Messstellung (12) und der Referenzstellung (10) um 90° gedreht wird.
